# EUROPEAN PATENT APPLICATION

(11) **EP 3 404 608 A1**
(43) Date of publication of application: **21.11.2018**
(21) Application number: 18171459.3
(22) Date of filing: 09.05.2018
(51) Int. Cl.: G06Q 30/06

(54) **FASHION ANALYSIS DEVICE AND FASHION ANALYSIS METHOD**

(30) Priority: 15.05.2017 JP 2017096329
(71) Applicant: FUJITSU LIMITED, Kanagawa 211-8588 (JP)
(72) Inventor: Nogami, Kenji, Kawasaki-shi, Kanagawa 211-8588 (JP); Hata, Sahoko, Kawasaki-shi, Kanagawa 211-8588 (JP)
(74) Representative: Hoffmann Eitle

(57) **Abstract**

A fashion analysis device includes a controller configured to acquire a captured image, perform extraction of one or more regions of one or more fashion items included in the captured image, specify each of one or more colors of each of the one or more regions; select a color for a fashion item in accordance with the specified one or more colors, and output the fashion item having the selected color.

## Description

### TECHNICAL FIELD

The embodiments discussed herein are related to a fashion analysis technique.

### BACKGROUND ART

For devices for analyzing fashion items, a technique for classifying and registering fashion items owned by a user based on colors and the like and providing coordination candidates based on preferences of the user and histories of coordination is known. In addition, for devices for analyzing fashion items, a technique for classifying fashion items owned by a user based on color graduations and storing the fashion items in a virtual closet is known.

For example, Japanese Laid-open Patent Publication No. 2004-220200 and International Publication Pamphlet No. WO2012/141319 have been disclosed.

### SUMMARY OF INVENTION

### TECHNICAL PROBLEM

In the conventional techniques, the presentation of fashion items based on colors preferred by a user is not considered, and it is difficult to present fashion items based on a color trend of the user.

According to an aspect, an object is to provide a fashion analysis program, a fashion analyzing device, and a fashion analysis method that present fashion items based on a color trend of a user.

### SOLUTION TO PROBLEM

According to an aspect, a fashion analysis device includes a controller configured to acquire a captured image, perform extraction of one or more regions of one or more fashion items included in the captured image, specify each of one or more colors of each of the one or more regions; select a color for a fashion item in accordance with the specified one or more colors, and output the fashion item having the selected color.

### ADVANTAGEOUS EFFECTS OF INVENTION

According to an aspect, a fashion item based on a color trend of a user may be presented.

### BRIEF DESCRIPTION OF DRAWINGS

FIG. 1 is a diagram illustrating an example of the configuration of a system according to a first embodiment;
FIG. 2 is a diagram illustrating an example of a server device according to the first embodiment;
FIG. 3A is a diagram illustrating an example of a captured image before image processing according to the first embodiment;
FIG. 3B is a diagram illustrating an example of the captured image after the image processing according to the first embodiment;
FIG. 4A is a diagram illustrating an example of a captured image before the image processing according to the first embodiment;
FIG. 4B is a diagram illustrating an example of the captured image after the image processing according to the first embodiment;
FIG. 5 is a diagram illustrating an example of fashion items classified based on types according to the first embodiment;
FIG. 6 is a diagram illustrating an example of the presentation of fashion items according to the first embodiment;
FIG. 7 is a flowchart illustrating an example of a fashion analysis process according to the first embodiment;
FIG. 8 is a diagram illustrating an example of the presentation of fashion items according to a second embodiment;
FIG. 9 is a diagram illustrating an example of the presentation of the fashion items according to the second embodiment;
FIG. 10 is a diagram illustrating an example of the presentation of the fashion items according to the second embodiment;
FIG. 11 is a diagram illustrating an example of a captured image according to the second embodiment; and
FIG. 12 is a diagram illustrating an example of a hardware configuration of a computer.

### DESCRIPTION OF EMBODIMENTS

Hereinafter, embodiments of a fashion analysis program, a fashion analysis device, and a fashion analysis method, which are disclosed herein, are described in detail with reference to the accompanying drawings. The techniques disclosed herein are not limited by the embodiments. The embodiments described below may be combined without contradiction.

### [First Embodiment]

### [Description of Entire System]

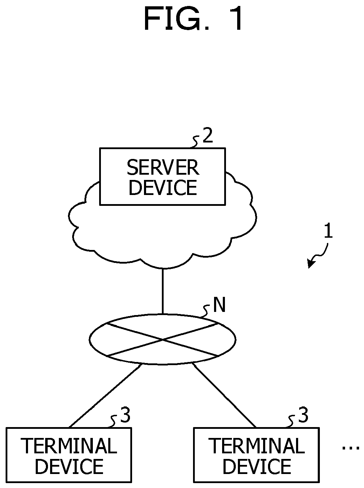

First, an example of a system 1 according to a first embodiment is described. FIG. 1 is a diagram illustrating an example of the configuration of the system 1 according to the first embodiment. The system 1 includes a server device 2 and terminal devices 3. The server device 2 and the terminal devices 3 are connected to and able to communicate with each other via a network N and exchange various types of information with each other. As one aspect of the network N, a communication network of an arbitrary type such as a communication network for mobile terminals such as mobile phones, a local area network (LAN), or a virtual private network (VPN) may be used.

The server device 2 executes fashion analysis based on images transmitted from the terminal devices 3 and provides information on fashion items such as clothes and accessories, for example. The server device 2 is, for example, a computer such as a server computer. The server device 2 is implemented as a single computer but may be implemented as a cloud C achieved by multiple computers. Although the single server device 2 is illustrated in the example of FIG. 1, an arbitrary number of server devices 2 may be implemented.

The terminal devices 3 are used by users who want information to be provided. Each of the terminal devices 3 is, for example, a mobile terminal device such as a tablet terminal, a smartphone, or a personal digital assistant (PDA). The terminal devices 3 may be computers such as personal computers, for example. Although the two terminal devices 3 are illustrated in the example of FIG. 1, an arbitrary number of terminal devices 3 may be implemented.

The system 1 according to the present embodiment is used for sharing to rent out fashion items such as clothes and accessories, for example. In the system 1, the server device 2 analyzes a color trend based on an image captured by a user and transmitted from a terminal device 3 and indicating a closet and presents fashion items of colors corresponding to the analyzed color trend.

### [Configuration of Server Device 2]

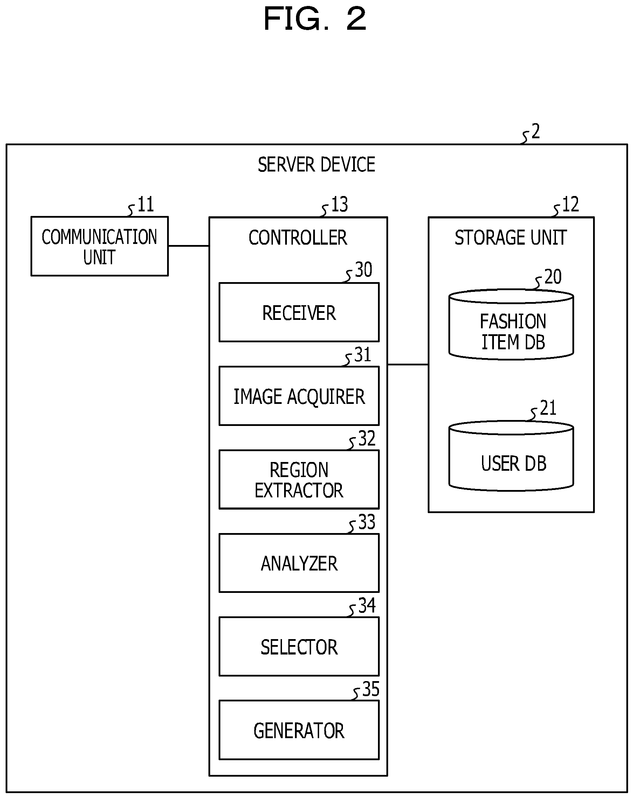

Next, an example of the server device 2 according to the first embodiment is described using FIG. 2. FIG. 2 is a diagram illustrating the example of the server device 2 according to the first embodiment. The server device 2 is, for example, a physical server such as a server computer. The server device 2 includes a communication unit 11, a storage unit 12, and a controller 13. The server device 2 may include various functional units that are not the functional units illustrated in FIG. 2 and are included in a known computer and are, for example, various input devices, audio output devices, and the like.

The communication unit 11 is connected to and able to communicate with the terminal devices 3 via the network N and transmits and receives various types of information. The communication unit 11 is, for example, a communication interface such as a network interface card (NIC).

The storage unit 12 is a storage device that stores various types of data. For example, the storage unit 12 is a storage device such as a hard disk, a solid state drive (SSD), or an optical disc. The storage unit 12 includes a fashion item DB 20 and a user DB 21.

The fashion item DB 20 stores information on fashion items in a state in which the information on the fashion items is associated with images of the fashion items. The fashion items are, for example, "clothes", "hats", "bags", "shoes", and "accessories". The information on the fashion items is information of types, colors, sizes, and the like of the fashion items such as the clothes and the bags. The information on the fashion items and the images of the fashion items are registered, deleted, or updated via the communication unit 11 by a terminal device used by an administrator and providing a service of renting out fashion items, which are not illustrated, for example.

Ranks are assigned to the fashion items stored in the fashion item DB 20 for each of the types of the fashion items. In addition, ranks are assigned to the fashion items stored in the fashion item DB 20 for each of color trend types described later, for example. The ranks are set by the administrator, for example.

The user DB 21 stores user information. The user DB 21 stores the user information for each of users. The user information is various types of information on the users and is, for example, information of heights, weights, gender of the users. The user information is registered, deleted, or updated by the terminal devices 3 via the communication unit 11.

The controller 13 is a device that controls the entire server device 2. The controller 13 is achieved by causing a central processing unit (CPU), a micro processing unit (MPU), a graphic processing unit (GPU), or the like to use a RAM as a work region to execute a program stored in an internal storage device. Alternatively, the controller 13 may be achieved by an integrated circuit such as an application specific integrated circuit (ASIC) or a field programmable gate array (FPGA), for example.

The controller 13 includes an internal memory for storing data and a program defining various process procedures and executes various processes using the data and the program. The controller 13 functions as various processing sections by executing various programs. For example, the controller 13 includes a receiver 30, an image acquirer 31, a region extractor 32, an analyzer 33, a selector 34, and a generator 35.

The receiver 30 executes various types of reception. For example, the receiver 30 causes a terminal device 3 to display a login screen in response to a request received from the terminal device 3 via the communication unit 11 and receives a user's login. If the user's login has succeeded, the receiver 30 causes the terminal device 3 to display an input screen for inputting user information and receives various types of input information. For example, the receiver 30 receives, from the terminal device 3, an image captured using a camera function of the terminal device 3 and indicating the "height" and the like of the user and closets owned by the user. In addition, the receiver 30 receives a login from the terminal device of the administrator and receives information on fashion items and images of the fashion items.

The image acquirer 31 acquires, from the information received by the receiver 30, a captured image obtained by imaging the closets owned by the user, for example. The closets owned by the user include a closet storing clothes and the like and a shoe closet storing shoes, for example. The image acquirer is an example of an acquirer.

The region extractor 32 extracts regions related to the fashion items from the acquired captured image. The region extractor 32 executes image processing on the acquired captured image, thereby identifying objects and extracting the regions related to the fashion items. In the image processing, arbitrary image identification techniques such as deep learning and pattern recognition may be used. The region extractor 32 executes the image processing, thereby removing background images of objects that are other than the fashion items and are among the objects included in the image obtained by imaging the closets. The region extractor 32 is an example of an extractor.

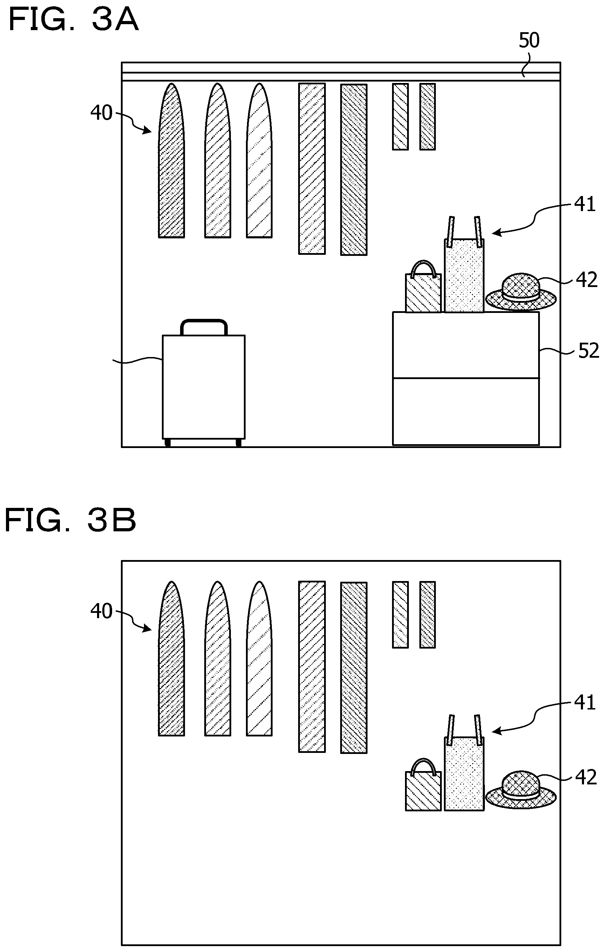

The captured image of the closets includes fashion items that are clothes 40, bags 41, and a hat 42, a pipe 50, a large travel bag 51, a chest 52, and the like, as illustrated in FIG. 3A. The region extractor 32 executes the image processing on the captured image, thereby removing background images of the pipe 50, the large travel bag 51, the chest 52, and the like from the captured image illustrated in FIG. 3A, for example. As illustrated in FIG. 3B, the region extractor 32 extracts only regions related to the fashion items. FIG. 3A is a diagram illustrating an example of the captured image before the image processing according to the first embodiment. FIG. 3B is a diagram illustrating an example of the captured image after the image processing according to the first embodiment. In FIGs. 3A and 3B, fashion items of the same color are indicated by hatching of the same type. The same applies to other drawings described below.

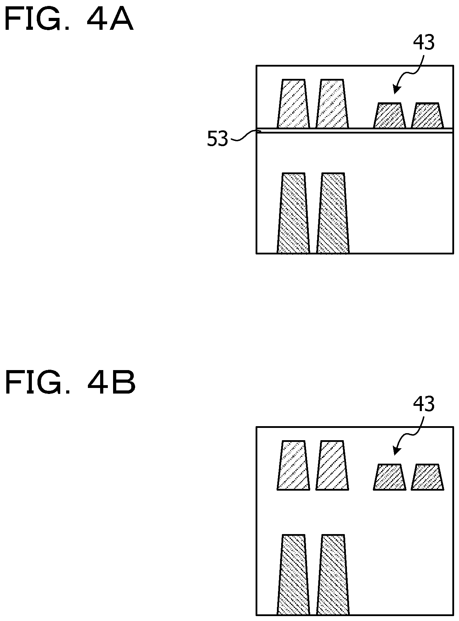

For example, as illustrated in FIG. 4A, in a captured image of the shoe closet, shoes 43 that are fashion items, and a partition shelf 53 or the like are included. The region extractor 32 executes the image processing on the captured image, thereby removing a background image of the partition shelf 53 or the like from the captured image illustrated in FIG. 4A. Then, the region extractor 32 extracts only regions related to the fashion items as illustrated in FIG. 4B. FIG. 4A is a diagram illustrating an example of the captured image before the image processing according to the first embodiment. FIG. 4B is a diagram illustrating an example of the captured image after the image processing according to the first embodiment.

Returning to FIG. 2, the analyzer 33 analyzes color information corresponding to the extracted regions based on color phases, saturation, luminance of the regions extracted by the region extractor 32 and related to the fashion items. Specifically, the analyzer 33 calculates the ratios of colors included in the extracted regions to the extracted regions and analyzes the trend of the colors included in the extracted regions. For example, the analyzer 33 analyzes "percentages of black, white, brown, and the like" as the color trend of the extracted regions.

The selector 34 selects fashion items of colors corresponding to the color trend based on the color trend analyzed by the analyzer 33. The selector 34 determines whether or not the analyzed color trend or the color trend of the fashion items owned by the user indicates monochrome. For example, if the ratio of black and white to the color trend is equal to or higher than a certain percentage, or if an average value of saturation within the regions is smaller than a certain value, the selector 34 determines that the color trend indicates monochrome. Then, the selector 34 selects, based on the results of the determination, fashion items of colors corresponding to the color trend from the fashion item DB 20. The selector 34 references the user DB 21 and selects the fashion items of sizes based on the height, weight, and the like of the user.

If the color trend indicates monochrome, the selector 34 selects, as an effect color, a color not included in the color trend and selects small items of the selected effect color from the fashion item DB 20. The small items are fashion items that exclude clothes and are, for example, a hat, a bag, shoes, an accessory, and the like. The selector 34 selects a color serving as the effect color corresponding to the color trend indicating monochrome and selects, for example, 5 fashion items ranked in the top 5 fashion items among hats registered as fashion items of the selected color, 5 fashion items ranked in the top 5 fashion items among bags registered as fashion items of the selected color, 5 fashion items ranked in the top 5 fashion items among shoes registered as fashion items of the selected color, and 5 fashion items ranked in the top 5 fashion items among accessories registered as fashion items of the selected color, for example. Then, the selector 34 extracts, from the selected fashion items, an arbitrary single hat, an arbitrary single bag, an arbitrary single pair of shoes, and an arbitrary single accessory. In this manner, if the color trend indicates monochrome, the selector 34 identifies the fashion items of the color corresponding to the color trend indicating monochrome. The selector 34 identifies the 5 sets of fashion items, for example. The selector 34 is an example of an identifying section.

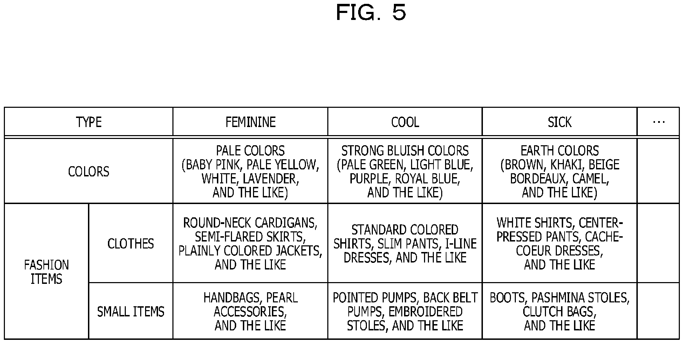

In addition, if the color trend does not indicate monochrome, the selector 34 selects a type based on the color trend and selects fashion items from the fashion item DB 20 based on the selected type. For example, as illustrated in FIG. 5, the selector 34 selects the type based on the color trend from among types illustrated in FIG. 5 and selects fashion items corresponding to the selected type. FIG. 5 is a diagram illustrating an example of fashion items classified based on the types according to the first embodiment. For example, the types are classified into "feminine", "cool", "sick", and the like. The types illustrated in FIG. 5 are an example and are not limited to this.

Colors of "feminine" are pale colors. If the color trend indicates that the ratio of baby pink, pale yellow, white, or the like is high, the selector 34 selects "feminine" as the type. "Clothes" that are fashion items of "feminine" are round-neck cardigans, semi-flared skirts, and the like. In addition, "small items" that are fashion items of "feminine" are handbags, pearl accessories, and the like.

Colors of "cool" are, for example, strong bluish colors. If the color trend indicates that the ratio of pale green, light blue, purple, or the like is high, the selector 34 selects "cool" as the type. "Clothes" that are fashion items of "cool" are standard colored shirts, slim pants, and the like. In addition, "small items" that are fashion items of "cool" are pointed pumps, back belt pumps, and the like.

Colors of "sick" are, for example, earth colors. If the color trend indicates that the ratio of brown, khaki, beige bordeaux, or the like is high, the selector 34 selects "sick" as the type. "Clothes" that are fashion items of "sick" are white shirts, center-pressed pants, and the like. In addition, "small items" that are fashion items of "sick" are boots, pashmina stoles, and the like. The aforementioned types of colors, clothes, and the like are an example and are not limited to this.

The selector 34 selects 5 fashion items ranked in the top 5 fashion items from among clothes registered as fashion items corresponding to the selected type, 5 fashion items ranked in the top 5 fashion items from among hats registered as fashion items corresponding to the selected type, 5 fashion items ranked in the top 5 fashion items from among bags registered as fashion items corresponding to the selected type, 5 fashion items ranked in the top 5 fashion items from among shoes registered as fashion items corresponding to the selected type, and 5 fashion items ranked in the top 5 fashion items from among accessories registered as fashion items corresponding to the selected type. Then, the selector 34 extracts, from the selected fashion items, an arbitrary single piece of clothes, an arbitrary single hat, an arbitrary single bag, an arbitrary single pair of shoes, and an arbitrary single accessory. In this manner, if the color trend does not indicate monochrome, the selector 34 identifies fashion items of colors corresponding to the type. The selector 34 identifies the 5 sets of fashion items, for example. A part of the small items (hats, bags, shoes, and accessories) may not be included as fashion items corresponding to the type, depending on the type.

For example, if the selector 34 selects "sick" as the type based on the color trend, the selector 34 selects 5 fashion items ranked in the top 5 fashion items among clothes corresponding to the type "sick", 5 fashion items ranked in the top 5 fashion items among hats corresponding to the type "sick", 5 fashion items ranked in the top 5 fashion items among bags corresponding to the type "sick", 5 fashion items ranked in the top 5 fashion items among shoes corresponding to the type "sick", and 5 fashion items ranked in the top 5 fashion items among accessories corresponding to the type "sick". Then, the selector 34 selects an arbitrary single piece of clothes, an arbitrary single hat, an arbitrary single bag, an arbitrary single pair of shoes, and an arbitrary single accessory. Then, the selector 34 identifies the 5 sets of fashion items, for example.

Returning to FIG. 2, the generator 35 generates images of the fashion items identified by the selector 34. The generator 35 uses the images of the fashion items to generate images to be displayed by the terminal device 3 of the user and causes the terminal device 3 to present the images. Specifically, the generator 35 generates the images to be presented to the user and causes the terminal device 3 to present the images. The generator 35 generates the images able to be switched and displayed by the terminal device 3 and including the identified fashion items. The generated images are transmitted to the terminal device 3 of the user via the communication unit 11. The generator 35 is an example of a presenting section.

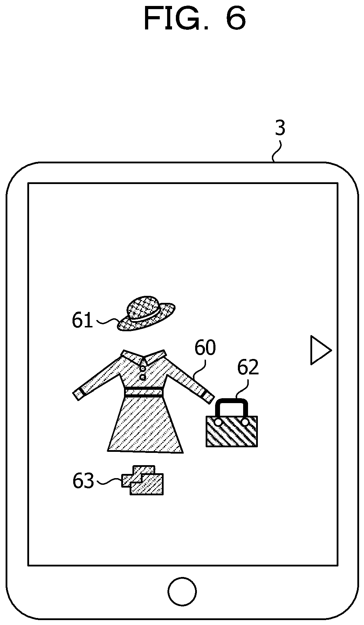

By executing this, such images as illustrated in FIG. 6 are displayed on the terminal device 3 of the user, and fashion items are presented. FIG. 6 is a diagram illustrating an example of the presentation of the fashion items according to the first embodiment. Images of a piece 60 of clothes, a hat 61, a bag 62, and shoes 63 are displayed on the terminal device 3. An image including information indicating whether or not the displayed items are fashion items owned by the user may be displayed on the terminal device 3. In addition, an arrow indicating that another image exists is displayed on the terminal device 3, and an image indicating presentation different from the presentation of the fashion items being displayed is displayed on the terminal device 3 by a flip operation or swipe operation of the user. The images displayed on the terminal device 3 of the user are not limited to the images illustrated in FIG. 6 and may be sectioned by tabs and displayed.

The user who has received the presentation of the fashion items may rent, based on the presented fashion items, fashion items not owned by the user and may coordinate the fashion items based on the color trend of the user.

### [Flow of Process]

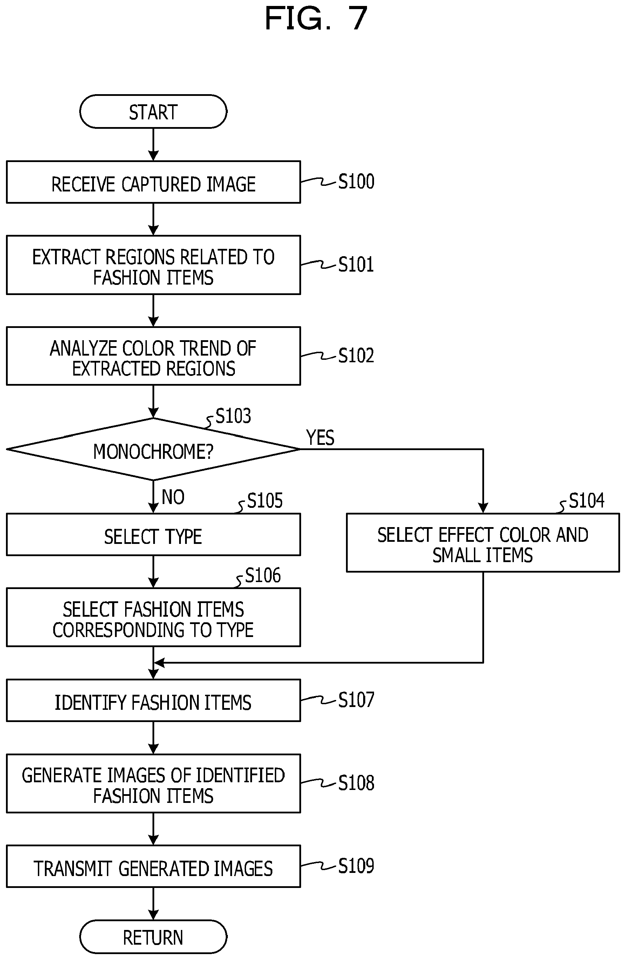

Next, a fashion analysis process to be executed by the server device 2 according to the present embodiment is described using FIG. 7. FIG. 7 is a flowchart illustrating an example of the fashion analysis according to the first embodiment. It is assumed that the "height" and "weight" of the user are already stored as user information in the user DB 21. As illustrated in FIG. 7, when a captured image of the closets owned by the user is transmitted by the terminal device 3, the communication unit 11 of the server device 2 receives the captured image (in S100).

Next, the region extractor 32 executes the image processing on the captured image, removes a region other than fashion items from the captured image, and extracts regions related to the fashion items (in S101). Next, the analyzer 33 analyzes the trend of colors included in the extracted regions (in S102).

Next, the selector 34 determines whether or not the analyzed color trend indicates monochrome (in S103). If the analyzed color trend indicates monochrome (Yes in S103), the selector 34 selects a color serving as an effect color and small items (in S104) and identifies fashion items (in S107). If the analyzed color trend does not indicate monochrome (No in S103), the selector 34 selects a type based on the color trend (in S105). Next, the selector 34 selects fashion items corresponding to the selected type (in S106) and identifies fashion items (in S107).

Next, the generator 35 generates images of the identified fashion items (in S108). Next, the communication unit 11 transmits the generated images of the fashion items to the terminal device 3 of the user (in S109) and terminates the process.

### [Effects]

As described above, the server device 2 according to the present embodiment acquires the image captured using a capturing device and indicating the closets of the user and extracts the regions related to the fashion items from the acquired captured image. In addition, the server device 2 identifies, based on color information corresponding to the extracted regions, fashion items corresponding to the color information. Thus, the fashion items based on the color information of the user may be presented to the user.

In addition, the server device 2 according to the present embodiment identifies fashion items from the captured image, removes a background image other than the fashion items, and extracts regions related to the fashion items. Thus, the color information of the regions related to the fashion items may be analyzed from the captured image of the closets.

### [Second Embodiment]

Although the embodiment is described, the techniques disclosed herein may be achieved by various different embodiments other than the aforementioned embodiment. In the aforementioned embodiment, the user DB 21 stores the "heights", "weights", and "gender" as the user information, but is not limited to this. For example, the user DB 21 may store "rental histories" as user information. The receiver 30 receives "rental histories" from the terminal device 3 via the communication unit 11. The user DB 21 stores the received "rental histories". The "rental histories" are, for example, user's rental histories (rental results) of fashion items identified in the past and presented to the user.

The selector 34 selects, based on the color trend analyzed by the analyzer 33 and the "rental histories" stored in the user DB 21, fashion items of colors corresponding to the color trend. For example, if a fashion item rented by the user in the past is included in fashion items corresponding to the type of the color trend, the selector 34 selects the fashion item rented by the user in the past. Thus, fashion items based on preferences of the user may be presented. In addition, for example, the selector 34 may select a fashion item different from the fashion item rented in the past. Thus, fashion items to be presented to the user may be diversified.

In addition, for example, the user DB 21 may store "evaluation values" or "fashion media" as user information. The receiver 30 receives the "evaluation values" or "fashion media" via the communication unit 11 from the terminal device 3. The user DB 21 stores the received "evaluation values" or "fashion media".

The "evaluation values" are evaluation values of the user for fashion items identified in the past and presented to the user. The "fashion media" are information identifying fashion media preferred by the user. The "fashion media" are, for example, information of fashion magazines preferred by the user and information of fashion items of sites browsed by the user. The "fashion media" may be information corresponding to "Like" buttons selected for pictures of fashion items preferred by the user in a social networking service (SNS), for example.

The selector 34 selects fashion items of colors corresponding to the color trend based on the color trend analyzed by the analyzer 33 and the "evaluation values" stored in the user DB 21. For example, the selector 34 selects fashion items so that a fashion item with a low evaluation value is not included in the selected fashion items. In addition, the selector 34 selects the fashion items so that a fashion item with a high evaluation value is included in the selected fashion items. Thus, fashion items preferred by the user may be presented.

In addition, the selector 34 selects fashion items of colors corresponding to the color trend based on the color trend analyzed by the analyzer 33 and the "fashion media" stored in the user DB 21. For example, the selector 34 selects, from among a fashion item group included in the "fashion media", fashion items corresponding to the type of the color trend. For example, the selector 34 selects fashion items from among a fashion item group published in a fashion magazine preferred by the user. Thus, fashion items based on preferences of the user may be presented. For example, the fashion item group is registered in the fashion item DB 20 via the communication unit 11 by an administrator who issues the fashion magazine, an administrator who produces fashion items published in the fashion magazine, or the like.

In addition, for example, the user DB 21 may store "presentation histories" as user information. The "presentation histories" indicate fashion items identified in the past and presented to the user. The user DB 21 stores, as the presentation histories, fashion items identified by the selector 34.

The selector 34 selects fashion items of colors corresponding to the color trend based on the color trend analyzed by the analyzer 33 and the "presentation histories" stored in the user DB 21. For example, the selector 34 selects fashion items different from fashion items presented in the past. Thus, fashion items to be presented to the user may be diversified.

The generator 35 generates images of identified fashion items in the aforementioned embodiment, but the embodiment is not limited to this. For example, the generator 35 may generate images clearly indicating fashion items, included in identified fashion items, of colors that are not included in color information on fashion items owned by the user.

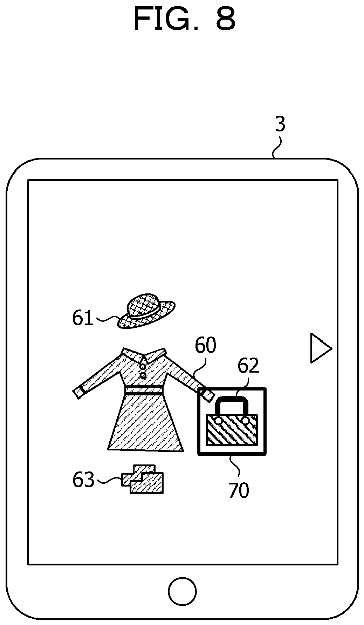

The analyzer 33 analyzes a color that is not included in the color information of the extracted regions. If a fashion item of the color that is not included is included in the selected fashion items, the generator 35 generates an image in which the fashion item of the color that is not included is surrounded by a frame 70, as illustrated in FIG. 8, for example. FIG. 8 is a diagram illustrating an example of the presentation of fashion items according to the second embodiment. A color of a bag 62 that is included in the selected fashion items among fashion items illustrated in FIG. 8 is the color that is not included. Thus, the user may easily know a color that is not included in the fashion items owned by the user or the user may easily know a fashion item that is not included in the fashion items owned by the user.

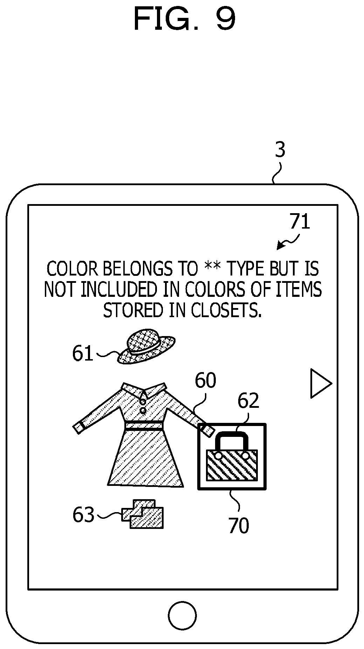

In addition, the generator 35 may clarify a fashion item of the color that is not included, and the generator 35 may generate an image in which characters 71 explaining the color that is not included are displayed, as illustrated in FIG. 9. Specifically, the generator 35 may use characters to present color information on the color that is not included, based on the presentation of fashion items. For example, the generator 35 generates an image including the characters 71 indicating that "the color belongs to ** type but is not included in the colors of the items stored in the closets.". FIG. 9 is a diagram illustrating an example of the presentation of fashion items according to the second embodiment. Thus, the user may further easily know a color that is not included in the fashion items owned by the user. The generator 35 may not display the frame 70 and may generate an image in which the characters 71 explaining the color that is not included are displayed.

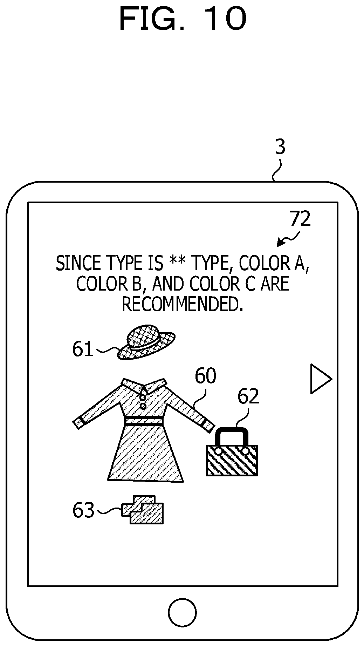

The generator 35 may use characters 72 to present color information based on the presentation of fashion items, as illustrated in FIG. 10. FIG. 10 is a diagram illustrating an example of the presentation of fashion items according to the second embodiment. For example, the generator 35 generates an image including the characters 72 indicating that "since the type is ** type, a color A, a color B, and a color C are recommended.". Thus, the user may easily know color information of fashion items. The generator 35 may generate an image in which only the characters 72 are displayed.

Although the selector 34 arbitrarily extracts fashion items from among selected fashion items in the aforementioned embodiments, the embodiments are not limited to this. For example, upon the extraction of fashion items, the selector 34 may select a similar color or an opposite color. In addition, upon the extraction of fashion items, the selector 34 may select an effect color. In addition, the selector 34 may select, for the color information of the extracted regions, the color that is not included.

In addition, although the selector 34 selects fashion items from the fashion item DB 20 in the aforementioned embodiments, the embodiments are not limited to this. For example, the selector 34 may select fashion items so that a fashion item owned by the user is included in the selected fashion items.

The user DB 21 stores, as user information, the fashion items owned by the user. For example, the user DB 21 stores the fashion items owned by the user based on "purchase histories". The "purchase histories" are histories of purchase conducted via the Internet, purchase histories registered after the user has purchased items directly at shops, and purchase histories (purchase results) of the user for fashion items identified in the past and presented to the user.

The selector 34 selects fashion items of colors corresponding to the color trend based on the color trend analyzed by the analyzer 33 and the fashion items owned by the user. For example, if a fashion item owned by the user is included in fashion items corresponding to the type, the selector 34 selects the fashion item owned by the user. Thus, fashion items including a fashion item owned by the user may be presented.

The user DB 21 may store the fashion items owned by the user based on the captured image of the closets. The fashion items based on the captured image of the closets are identified by the image processing executed by the region extractor 32. For example, the region extractor 32 generates a dictionary with which the fashion items are able to be identified by machine learning, and the region extractor 32 causes the dictionary to be stored in the user DB 21 and uses the stored dictionary to identify the fashion items. The user DB 21 stores the identified fashion items.

In addition, the selector 34 may identify fashion items based on two or more of the "purchase histories", "evaluation values", "fashion media", and "presentation histories".

In addition, the user DB 21 may store, as user information, the color trend analyzed by the analyzer 33. Specifically, the user DB 21 may store the color trend of the fashion items of the closets owned by the user. Thus, fashion items based on the color trend of the user may be presented.

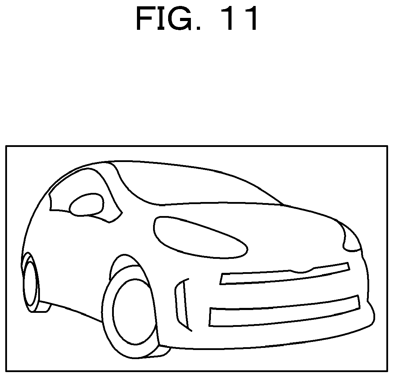

In addition, although the captured image is obtained by imaging the closets owned by the user in the embodiments, the embodiments are not limited to this. For example, the captured image may include a captured image of the user wearing fashion items. In addition, the captured image may include a captured image obtained by imaging a vehicle owned by the user. FIG. 11 is a diagram illustrating an example of the captured image according to the second embodiment. In addition, the captured image may include a captured image of a room of the user. Thus, fashion items of colors based on a color trend of objects excluding the fashion items owned by the user may be further presented.

In addition, the administrator who provides the service of renting out fashion items according to the aforementioned embodiments may be another user. Specifically, the system 1 according to the aforementioned embodiments may be applied to a system for renting out and renting fashion items between users.

### [System]

In addition, all or a part of the processes described in the embodiments and to be automatically executed may be manually executed. Alternatively, all or a part of the processes described in the embodiments and to be manually executed may be automatically executed. The process procedure, the control procedure, the specific names, and the information including the various parameters and the various types of data, which are described in this specification and illustrated in the drawings, may be arbitrarily changed, unless otherwise specified.

In addition, the constituent elements of the devices illustrated in the drawings are functionally conceptual and may not be physically configured as illustrated in the drawings. Specifically, specific forms of the separation and integration of the constituent elements are not limited to those illustrated in the drawings. Specifically, all or a part of the constituent elements may be functionally or physically separated or integrated based on various types of loads or usage statuses on an arbitrary basis. In addition, all or a part of the processing functions to be executed by the devices may be achieved by a CPU and a program analyzed and executed by the CPU or may be achieved as hardware by wired logic.

### [Hardware Configuration]

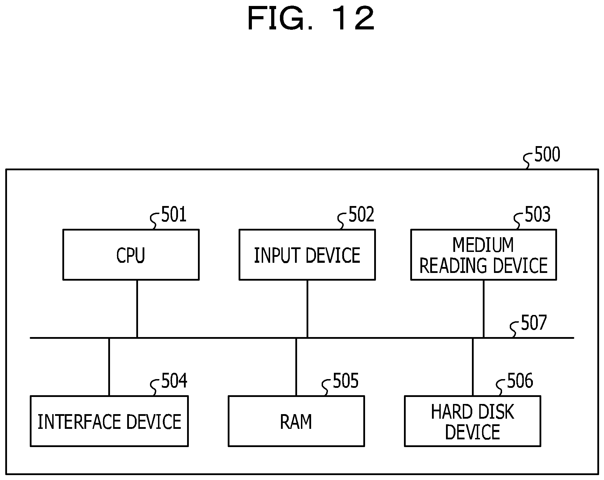

FIG. 12 is a diagram illustrating an example of a hardware configuration of a computer. As illustrated in FIG. 12, a computer 500 includes a CPU 501 that executes various types of arithmetic processing, and an input device 502 that receives images input from a user. The computer 500 further includes a medium reading device 503 that reads a program and the like from a storage medium, and an interface device 504 that connects the computer 500 to another device. The computer 500 further includes a random access memory (RAM) 505 that temporarily stores various types of information, and a hard disk device 506. The devices 501 to 506 are connected to a bus 507.

In the hard disk device 506, a control program having the same functions as the processing sections that are the receiver 30, the image acquirer 31, the region extractor 32, the analyzer 33, the selector 34, and the generator 35, which are described in the aforementioned embodiments, is stored. In addition, in the hard disk device 506, various types of data to be used to achieve the control program are stored. The various types of data include data stored in the storage unit 12.

The CPU 501 reads programs stored in the hard disk device 506, loads the programs into the RAM 505, and executes the programs, thereby executing the various processes. The programs may cause the computer 500 to function as the receiver 30, the image acquirer 31, the region extractor 32, the analyzer 33, the selector 34, and the generator 35, which are described in the embodiments.

The aforementioned programs may not be stored in the hard disk device 506. For example, the computer 500 may read and execute the programs stored in a storage medium readable by the computer 500. The storage medium readable by the computer 500 corresponds to a portable storage medium such as a CD-ROM, a DVD, or a Universal Serial Bus (USB) memory, a semiconductor memory such as a flash memory, a hard disk drive, or the like. In addition, the programs may be stored in a device connected to a public line, the Internet, a local area network (LAN), or the like and read and executed by the computer 500.

### DESCRIPTION OF REFERENCE SIGNS

- 1: System
- 2: Server device
- 3: Terminal device
- 11: Communication unit
- 12: Storage unit
- 13: Controller
- 20: Fashion item DB
- 21: User DB
- 30: Receiver
- 31: Image acquirer
- 32: Region extractor
- 33: Analyzer
- 34: Selector
- 35: Generator

## Claims

1. A fashion analysis device comprising:
a controller configured to:
acquire a captured image;
perform extraction of one or more regions of one or more fashion items included in the captured image;
specify each of one or more colors of each of the one or more regions;
select a color for a fashion item in accordance with the specified one or more colors; and
output the fashion item having the selected color.

2. The fashion analysis device according to claim 1, wherein the fashion item is displayed in the color.

3. The fashion analysis device according to claim 1, wherein the color is selected in accordance with a tendency of the specified one or more colors.

4. The fashion analysis device according to claim 3, wherein the tendency is the ratios of the one or more colors.

5. The fashion analysis device according to claim 1, wherein the fashion item is selected from a plurality of fashion items that is output candidates in accordance with received designation of fashion medium.

6. The fashion analysis device according to claim 5, wherein the plurality of fashion items is included in a fashion item group included in the designated fashion medium.

7. The fashion analysis device according to claim 1, wherein the selected color is a color that is not included in the specified one or more colors.

8. The fashion analysis device according to claim 1, wherein the extraction includes specifying the one or more fashion items from the captured image, removing a background image other than the one or more fashion items, and extracting the one or more regions.

9. The fashion analysis device according to claim 1, wherein the fashion item is determined on the basis of at least one of a previously output fashion item of the color, an evaluation value for a previously output fashion item of the color, a rental result for a previously output fashion item of the color, and a purchase result for a previously output fashion item of the color.

10. A fashion analysis method executed by a computer, the method comprising:
performing extraction of one or more regions of one or more fashion items included in the captured image;
specifying each of one or more colors of each of the one or more regions;
select a color for a fashion item in accordance with the specified one or more colors; and
outputting the fashion item having the selected color.

11. The fashion analysis method according to claim 10, wherein the fashion item is displayed in the color.

12. The fashion analysis method according to claim 10, wherein the color is selected in accordance with a tendency of the specified one or more colors.

13. The fashion analysis method according to claim 12, wherein the tendency is the ratios of the one or more colors.

14. A fashion analysis program that causes a computer to execute a process comprising:
performing extraction of one or more regions of one or more fashion items included in the captured image;
specifying each of one or more colors of each of the one or more regions;
select a color for a fashion item in accordance with the specified one or more colors; and
outputting the fashion item having the selected color.
